# EUROPEAN PATENT APPLICATION

(11) **EP 4 645 438 A1**
(43) Date of publication of application: **05.11.2025**
(21) Application number: 25173078.4
(22) Date of filing: 29.04.2025
(51) Int. Cl.: H01M 4/133, H01M 4/134, H01M 4/36, H01M 4/38, H01M 4/587, H01M 4/62, H01M 10/0525, H01M 4/02

(54) **LITHIUM-ION BATTERY NEGATIVE ELECTRODE AND LITHIUM-ION BATTERY**

(30) Priority: 30.04.2024 CN 202410543903
(71) Applicant: Techtronic Cordless GP, Anderson, SC 29621 (US)
(72) Inventor: HUANG, Xin Yue, Dongguan City (CN); XU, Gang, Dongguan City (CN); WANG, Na, Dongguan City (CN); QIN, Ming Xia, Dongguan City (CN)
(74) Representative: Meissner Bolte Partnerschaft mbB

(57) **Abstract**

The present invention relates to the field of batteries, in particular to a lithium-ion battery negative electrode and a lithium-ion battery. A negative electrode for a lithium-ion battery comprises a negative electrode current collector and a negative electrode material applied to the negative electrode current collector, characterized in that a compaction density of the negative electrode material is 1.3 - 1.7 g/cm³, a single-side application weight of the negative electrode material on the negative electrode current collector is 3.5 - 6.5 mg/cm², and a single-side negative electrode material thickness of the negative electrode is 20 - 50 µm. The negative electrode for a lithium-ion battery can improve the self-discharge current of a lithium-ion battery.

## Description

### Technical Field

The present invention relates to the field of batteries, in particular to a lithium-ion battery negative electrode and a lithium-ion battery.

### Background Art

When stored in an open circuit state, batteries will experience self-discharge, resulting in a loss of battery capacity. Depending on whether the lost capacity can be recovered, self-discharge can generally be classed as physical self-discharge, where the capacity loss is recoverable, and chemical self-discharge, where the capacity loss is irrecoverable. Both types of self-discharge may exist simultaneously within a battery.

Self-discharge is an important index for judging battery performance, and can be judged using self-discharge current. For example, a charging current for keeping a battery at a desired open circuit voltage (OCV) can be measured, and the measured charging current may be regarded as the self-discharge current of the battery.

The self-discharge current will be affected by various constituent components inside the battery, e.g. positive electrode material, negative electrode material and electrolyte. In addition, the self-discharge current will also be affected by environmental factors, the number of cycles of use, and the state of charge (SOC) of the battery, etc.

On the whole, lithium-ion batteries have better self-discharge currents than lead acid batteries and nickel metal hydride batteries, but nevertheless experience self-discharge to a certain degree. Although there are some lithium batteries in the prior art which have made improvements to the abovementioned aspects of batteries, there is still room to further improve their self-discharge current.

### Summary of the Invention

An object of the present invention is to provide a lithium-ion battery negative electrode and a lithium-ion battery and a use thereof, to improve the self-discharge current of the lithium-ion battery.

In one aspect of the present invention, a negative electrode for a lithium-ion battery is provided, comprising a negative electrode current collector and a negative electrode material applied to the negative electrode current collector, the negative electrode material having a compaction density of 1.3 - 1.7 g/cm³. For example, the compaction density of the negative electrode material may be 1.3, 1.35, 1.4, 1.45, 1.5, 1.55, 1.6, 1.65 or 1.7 g/cm³, or a sub-range consisting of any values within these ranges. Preferably, the compaction density of the negative electrode material is 1.3 - 1.6 g/cm³. Most preferably, the compaction density of the negative electrode material is 1.4 - 1.5 g/cm³.

In an embodiment, a single-side application weight of the negative electrode material on the negative electrode current collector is 3.5 - 6.5mg/cm². For example, the single-side application weight of the negative electrode material on the negative electrode current collector may be 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4 or 6.5 mg/cm², or a sub-range consisting of any values within these ranges. Preferably, the single-side application weight of the negative electrode material on the negative electrode current collector is 4 - 6.5 mg/cm². Most preferably, the single-side application weight of the negative electrode material on the negative electrode current collector is 4.5 - 5.1 mg/cm².

In an embodiment, a single-side negative electrode material thickness of the negative electrode is 20 - 50 µm. For example, a single-side electrode thickness of the negative electrode may be 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50 µm, or a sub-range consisting of any values within these ranges. Preferably, the single-side negative electrode material thickness of the negative electrode is 25 - 45 µm. Most preferably, the single-side negative electrode material thickness of the negative electrode is 32 - 38 µm.

In an embodiment, the negative electrode has a diffusion resistance of 2.5 - 4 Ω*cm². For example, the diffusion resistance of the negative electrode may be 2.5, 2.6, 2.7, 2.8, 2.9, 3.0, 3.1, 3.2, 3.3, 3.4, 3.5, 3.6, 3.7, 3.8, 3.9 or 4.0 Ω*cm², or a sub-range consisting of any values within these ranges. Preferably, the diffusion resistance of the negative electrode is 2.8 - 3.8 Ω*cm². Most preferably, the diffusion resistance of the negative electrode is 3.0 - 3.1 Ω*cm².

In an embodiment, the negative electrode has a diffusion resistivity of 500 - 1500 Ω*cm. For example, the diffusion resistivity of the negative electrode may be 500, 550, 600, 650, 700, 750, 800, 850, 900, 950, 1000, 1150, 1200, 1250, 1300, 1350, 1400, 1450 or 1500 Ω*cm, or a sub-range consisting of any values within these ranges. Preferably, the diffusion resistivity of the negative electrode is 700 - 1300 Ω*cm. Most preferably, the diffusion resistivity of the negative electrode is 750 - 1000 Ω*cm.

In an embodiment, the negative electrode has a capacitance of 7 - 12 mF. For example, the capacitance of the negative electrode may be 7, 7.5, 8, 8.5, 9, 9.5, 10, 10.5, 11, or 11.5 or 12 mF, or a sub-range consisting of any values within these ranges. Preferably, the capacitance of the negative electrode is 8.5 - 11 mF. Most preferably, the capacitance of the negative electrode is 9.5 - 10.5 mF.

In an embodiment, the negative electrode at least comprises a negative electrode active material, e.g. artificial graphite and/or a silicon-carbon material.

In an embodiment, the mass ratio of artificial graphite to silicon-carbon material may be 1.5 - 10, e.g. may be 1.5, 2.0, 2.5, 3.0, 3.5, 4.0, 4.5, 5.0, 5.5, 6.0, 6.5, 7.0, 7.5, 8.0, 8.5, 9.0, 9.5 or 10.0, or a sub-range consisting of any values within these ranges.

In an embodiment, the negative electrode may further comprise a conductive agent, e.g. superconductive carbon black (SP) and/or single-walled carbon nanotubes (SWCNT).

In an embodiment, the mass ratio of superconductive carbon black to single-walled carbon nanotubes may be 3 - 30, e.g. may be 3, 4, 5, 6, 7, 8, 9, 10, 11, 12, 13, 14, 15, 16, 17, 18, 19, 20, 21, 22, 23, 24, 25, 26, 27, 28, 29 or 30, or a sub-range consisting of any values within these ranges.

In an embodiment, the negative electrode may further comprise a binder, e.g. carboxymethylcellulose (CMC) and/or styrene-butadiene rubber (SBR).

In a preferred embodiment, the negative electrode comprises a negative electrode active material, a conductive agent and a binder.

In addition, the inventors unexpectedly found that a negative electrode for a lithium-ion battery having a combination of features in the embodiments described above can improve the self-discharge current of the lithium-ion battery more effectively than the negative electrodes for lithium-ion batteries in the embodiments described above.

In a preferred embodiment, the compaction density of the negative electrode material is 1.3 - 1.7 g/cm³ (for example, the compaction density of the negative electrode material may be 1.3, 1.35, 1.4, 1.45, 1.5, 1.55, 1.6, 1.65 or 1.7 g/cm³, or a sub-range consisting of any values within these ranges), the single-side application weight of the negative electrode material on the negative electrode current collector is 3.5 - 6.5 mg/cm² (the single-side application weight of the negative electrode material on the negative electrode current collector may be 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4 or 6.5 mg/cm², or a sub-range consisting of any values within these ranges), and the single-side negative electrode material thickness of the negative electrode is 20 - 50 µm (for example, the single-side electrode thickness of the negative electrode may be 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50 µm, or a sub-range consisting of any values within these ranges). More preferably, the compaction density of the negative electrode material is 1.3 - 1.6 g/cm³, the single-side application weight of the negative electrode material on the negative electrode current collector is 4 - 6.5 mg/cm², and the single-side negative electrode material thickness of the negative electrode is 25 - 45 µm. Most preferably, the compaction density of the negative electrode material is 1.4 - 1.5 g/cm³, the single-side application weight of the negative electrode material on the negative electrode current collector is 4.5 - 5.1 mg/cm², and the single-side negative electrode material thickness of the negative electrode is 32 - 38 µm. Compared with an embodiment which defines only one of the compaction density of the negative electrode material, the single-side application weight of the negative electrode material on the negative electrode current collector, and the single-side negative electrode material thickness of the negative electrode, this embodiment can improve the self-discharge current of the lithium-ion battery more effectively.

In another aspect of the present invention, a lithium-ion battery is provided, comprising a positive electrode, a negative electrode, an electrolyte and a casing, wherein the negative electrode is the negative electrode for a lithium-ion battery as described above.

In an embodiment, a capacity retention rate of the lithium-ion battery in a test of storage for 30 days at 60°C may be 83.2% - 86%, e.g. may be 83.2, 83.3, 83.4, 83.5, 83.6, 83.7, 83.8, 83.9, 84.0, 84.1, 84.2, 84.3, 84.4, 84.5, 84.6, 84.7, 84.8, 84.9, 85.0, 85.1, 85.2, 85.3, 85.4, 85.5, 85.6, 85.7, 85.8, 85.9 or 86.0%, or a sub-range consisting of any values within these ranges. Preferably, the capacity retention rate of the lithium-ion battery in a test of storage for 30 days at 60°C may be 84% - 85%.

Another aspect of the present invention provides the use of the negative electrode for a lithium-ion battery as described above for reducing a self-discharge current of a lithium-ion battery.

### Brief Description of the Drawings

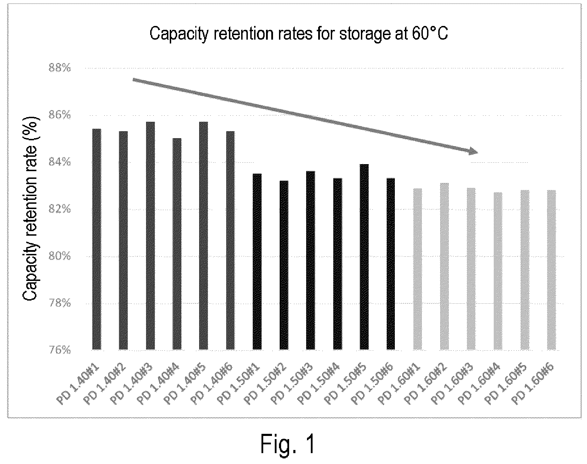

**Fig. 1** depicts specific details of the capacity retention rates of Examples 1 - 3. The value after PD indicates the compaction density of the negative electrode material, e.g. PD 1.40 means that the compaction density of the negative electrode material is 1.40 g/cm³; and the number after # is the corresponding repetition number.

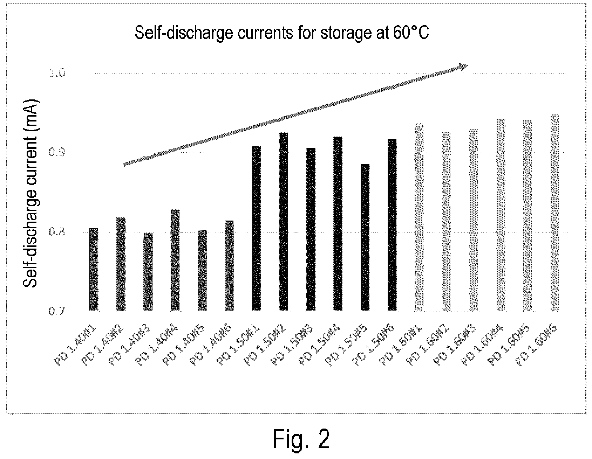

**Fig. 2** depicts details of the self-discharge currents of Examples 1 - 3. The value after PD indicates the compaction density of the negative electrode material, e.g. PD 1.40 means that the compaction density of the negative electrode material is 1.40 g/cm³; and the number after # is the corresponding repetition number.

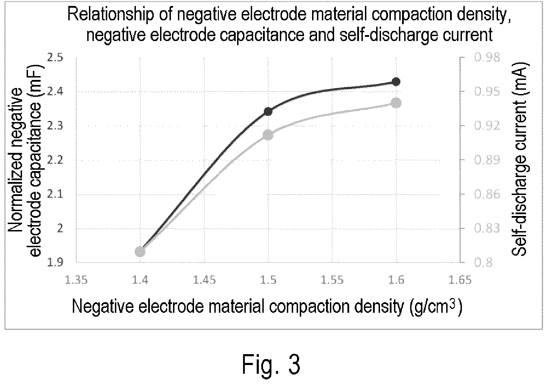

**Fig. 3** shows how the negative electrode material compaction density, the negative electrode capacitance and the self-discharge current of Examples 1 - 3 are related to each other.

### Detailed Description of the Invention

The technical solution of the present invention is explained further below in conjunction with the drawings and Examples, but is not limited to this; any modifications or equivalent substitutions made to the technical solution of the present invention within the spirit of the technical solution of the present invention shall be included in the scope of protection of the present invention.

In the present invention, the values may be rounded approximate values.

In the present invention, all defined interval ranges include endpoint values.

In the present invention, unless otherwise stated, each test is performed at room temperature. The parameters are all measured at room temperature. Said room temperature may be 10 - 35°C, preferably 20 - 30°C, and most preferably 25°C.

In the present invention, electrochemical parameters of the negative electrode (e.g. diffusion resistance, diffusion resistivity, capacitance) may for example be acquired by means of a corresponding symmetric cell.

In the present invention, the current collector is a high conductor of electrons which is chemically inactive and used for continuously passing current at an electrode (positive electrode or negative electrode) during discharging or charging. The current collector may be in the form of foil, a plate or mesh, etc.; as long as its form corresponds to the purpose thereof, it is not subject to any special restrictions. Preferably, the current collector is preferably in the form of foil. Examples of current collectors may be aluminium foil, aluminium mesh, perforated aluminium sheet, aluminium expanded sheet, stainless steel foil, stainless steel mesh, perforated stainless steel sheet, stainless steel expanded sheet, expanded nickel, nickel non-woven fabric, copper foil, copper mesh, perforated copper sheet, copper expanded sheet, titanium foil, titanium mesh, carbon non-woven fabric, carbon woven fabric, etc.

In an embodiment, the negative electrode for a lithium-ion battery of the present invention may for example be in the form of a sheet, comprising a negative electrode current collector and a negative electrode material.

In an embodiment, the negative electrode current collector may for example have a thickness of 5 µm to 50 µm.

In an embodiment, the negative electrode current collector is copper foil.

In the present invention, the negative electrode material is formed on a surface of the negative electrode current collector. In an embodiment, the negative electrode material may only be formed on one side of the negative electrode current collector. In another embodiment, the negative electrode material could also be formed on a front side and a back side of the negative electrode current collector. In an embodiment, the negative electrode material may for example have a thickness of 10 µm to 200 µm.

In the present invention, the negative electrode material contains a negative electrode active material. In an embodiment, the negative electrode material could also consist essentially of a negative electrode active material alone, and may also comprise an optional component. In a specific embodiment, the negative electrode active material may for example contain one or more selected from graphite (e.g. artificial graphite), soft carbon, hard carbon, a silicon-carbon material (e.g. a silicon-carbon composite), elemental silicon and SiOₓ, preferably graphite (e.g. artificial graphite) and a silicon-carbon material (e.g. a silicon-carbon composite). The mass ratio of graphite (e.g. artificial graphite) to silicon-carbon material (e.g. silicon-carbon composite) may be 1.5 - 10, e.g. may be 1.5, 2.0, 2.5, 3.0, 3.5, 4.0, 4.5, 5.0, 5.5, 6.0, 6.5, 7.0, 7.5, 8.0, 8.5, 9.0, 9.5 or 10.0, or a sub-range consisting of any values within these ranges.

In an embodiment, the negative electrode material may further comprise a binder, which binds solids together. In an embodiment, the binder may comprise an optional component. Examples of the binder are carboxymethyl cellulose (CMC), styrene-butadiene rubber (SBR), polyvinylpyrrolidone (PVP), polyvinylidene fluoride (PVDF), polybenzimidazole, polyimide, polyvinyl acetate, polyacrylonitrile, polyvinyl alcohol, starch, hydroxypropyl methylcellulose, regenerated cellulose, polyvinyl pyrrolidone, polyethylene, polypropylene, polystyrene, poly(methyl methacrylate), polyaniline, acrylonitrile-butadiene-styrene copolymer, phenolic resin, epoxy resin, polyethylene terephthalate, polytetrafluoroethylene, polyphenylene sulfide, polyamide-imide, polyetherimide, polyethylene sulfone, polyacetal, polyphenyl ether, polybutylene terephthalate, ethylene-propylene-diene terpolymer (EPDM), sulfonated EPDM, fluorocarbon rubber and various copolymers, preferably one or more selected from CMC, SBR, PVP, PAA and PVDF. As a preferred, non-limiting example, the binder is CMC and SBR. The proportion of the binder in the negative electrode material may for example be 0.1 wt% to 10 wt%.

In addition to the negative electrode active material, to reduce the battery internal resistance, a suitable amount of a conductive agent may also be added to the negative electrode material. In an embodiment, the conductive agent may comprise an optional component. In a specific embodiment, the conductive agent may be selected from one or more of superconductive carbon black (SP), carbon nanotubes (CNT), conductive carbon black, carbon fibres and graphite conductive agents. Preferably, the conductive agent in the negative electrode material comprises SP and CNT. In a further preferred embodiment, the CNT are single-walled carbon nanotubes (SWCNT).

In an embodiment, the content of the conductive agent in the negative electrode material is 1 wt% to 4 wt%. The content of SP in the negative electrode material is 1 wt% to 4 wt%. The content of CNT in the negative electrode material is 0.01 wt% to 0.12 wt%. The mass ratio of SP to CNT in the negative electrode material is 3 - 1500. Preferably, the mass ratio of superconductive carbon black to single-walled carbon nanotubes may be 3 - 30, e.g. may be 3, 4, 5, 6, 7, 8, 9, 10, 11, 12, 13, 14, 15, 16, 17, 18, 19, 20, 21, 22, 23, 24, 25, 26, 27, 28, 29 or 30, or a sub-range consisting of any values within these ranges.

In a preferred embodiment, the negative electrode comprises a negative electrode active material, a conductive agent and a binder.

In an embodiment, the negative electrode material may be formed by application of a slurry comprising a solvent. Examples of the solvent are N-methylpyrrolidone (NMP), cyclohexanone, water, toluene and xylene, but the content of the present disclosure is not limited to this. Preferably, the solvent used for the negative electrode material is water (e.g. deionized water).

In an embodiment, the negative electrode for a lithium-ion battery comprises a negative electrode current collector and a negative electrode material applied to the negative electrode current collector, the negative electrode material having a compaction density of 1.3 - 1.7 g/cm³. For example, the compaction density of the negative electrode material may be 1.3, 1.35, 1.4, 1.45, 1.5, 1.55, 1.6, 1.65 or 1.7 g/cm³, or a sub-range consisting of any values within these ranges.

In an embodiment, a single-side application weight of the negative electrode material on the negative electrode current collector is 3.5 - 6.5mg/cm². For example, the single-side application weight of the negative electrode material on the negative electrode current collector may be 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4 or 6.5 mg/cm², or a sub-range consisting of any values within these ranges.

In an embodiment, a single-side negative electrode material thickness of the negative electrode is 20 - 50 µm. For example, a single-side electrode thickness of the negative electrode may be 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50 µm, or a sub-range consisting of any values within these ranges.

In an embodiment, the diffusion resistance of the negative electrode is 2.5 - 4 Ω*cm². For example, the diffusion resistance of the negative electrode may be 2.5, 2.6, 2.7, 2.8, 2.9, 3.0, 3.1, 3.2, 3.3, 3.4, 3.5, 3.6, 3.7, 3.8, 3.9 or 4.0 Ω*cm², or a sub-range consisting of any values within these ranges.

In an embodiment, the diffusion resistivity of the negative electrode is 500 - 1500 Ω*cm. For example, the diffusion resistivity of the negative electrode may be 500, 550, 600, 650, 700, 750, 800, 850, 900, 950, 1000, 1150, 1200, 1250, 1300, 1350, 1400, 1450 or 1500 Ω*cm, or a sub-range consisting of any values within these ranges.

In an embodiment, the negative electrode has a capacitance of 7 - 12 mF. For example, the capacitance of the negative electrode may be 7, 7.5, 8, 8.5, 9, 9.5, 10, 10.5, 11, or 11.5 or 12 mF, or a sub-range consisting of any values within these ranges.

The present invention further provides a lithium-ion battery, comprising a positive electrode, a negative electrode, an electrolyte and a casing, wherein the negative electrode is the negative electrode for a lithium-ion battery as described above.

The positive electrode is for example in the form of a sheet, comprising a positive electrode current collector and a positive electrode material.

In an embodiment, the positive electrode current collector may for example have a thickness of 5 µm to 50 µm.

In an embodiment, the positive electrode current collector is aluminium foil.

In the present invention, the positive electrode material is formed on a surface of the positive electrode current collector. In an embodiment, the positive electrode material may only be formed on one side of the positive electrode current collector. In another embodiment, the positive electrode material could also be formed on a front side and a back side of the positive electrode current collector. In an embodiment, the positive electrode material may for example have a thickness of 10 µm to 200 µm.

In the present invention, the positive electrode material contains a positive electrode active material. In an embodiment, the positive electrode material may consist essentially of a positive electrode active material alone, and may also comprise an optional component. In a specific embodiment, the positive electrode active material may for example contain one or more selected from lithium nickel cobalt manganese oxide, lithium cobalt oxide, lithium nickel oxide, lithium manganese oxide, lithium nickel cobalt aluminium oxide and lithium iron phosphate, preferably lithium nickel cobalt manganese oxide (including monocrystalline and polycrystalline).

In an embodiment, the positive electrode material may further comprise a binder, which binds solids together. In an embodiment, the binder may comprise an optional component. Examples of the binder are carboxymethyl cellulose (CMC), styrene-butadiene rubber (SBR), polyvinylpyrrolidone (PVP), polyvinylidene fluoride (PVDF), polybenzimidazole, polyimide, polyvinyl acetate, polyacrylonitrile, polyvinyl alcohol, starch, hydroxypropyl methylcellulose, regenerated cellulose, polyvinyl pyrrolidone, polyethylene, polypropylene, polystyrene, poly(methyl methacrylate), polyaniline, acrylonitrile-butadiene-styrene copolymer, phenolic resin, epoxy resin, polyethylene terephthalate, polytetrafluoroethylene, polyphenylene sulfide, polyamide-imide, polyetherimide, polyethylene sulfone, polyacetal, polyphenyl ether, polybutylene terephthalate, ethylene-propylene-diene terpolymer (EPDM), sulfonated EPDM, fluorocarbon rubber and various copolymers, preferably one or more selected from CMC, SBR, PVP and PVDF. As a preferred, non-limiting example, the binder is PVDF. The proportion of the binder in the positive electrode material may for example be 0.1 wt% to 10 wt%.

In addition to the positive electrode active material, to reduce the battery internal resistance, a suitable amount of a conductive agent may also be added to the positive electrode material. In an embodiment, the conductive agent may comprise an optional component. In a specific embodiment, the conductive agent may be selected from one or more of superconductive carbon black (SP), carbon nanotubes (CNT), conductive carbon black, carbon fibres and graphite conductive agents. Preferably, the conductive agent is SP.

In an embodiment, the content of the conductive agent in the positive electrode material is 0.1 wt% to 3 wt%.

In an embodiment, the positive electrode material may be formed by application of a slurry comprising a solvent. Examples of the solvent are N-methylpyrrolidone (NMP), cyclohexanone, water, toluene and xylene, but the content of the present disclosure is not limited to this. Preferably, the solvent used for the positive electrode material is NMP.

In an embodiment, the electrolyte may for example be an organic electrolyte. The organic electrolyte is prepared by dissolving a lithium salt in an organic solvent. The organic solvent may be any suitable material that can be used as an organic solvent. Examples of the organic solvent are ethylene carbonate, vinylethylene carbonate, propylene carbonate, ethylene carbonate, fluoroethylene carbonate, butylene carbonate, dimethyl carbonate, diethyl carbonate, ethyl methyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or combinations thereof. The lithium salt may be any lithium salt commonly used in the art. For example, the lithium salt is LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ+1SO₂)(C_{y}F_{2y}+1SO₂) (where x and y are natural numbers), LiCl, LiI or any mixture thereof.

In addition to the abovementioned organic electrolytes, other exemplary electrolytes further include non-aqueous electrolytes, organic solid electrolytes, inorganic solid electrolytes, etc. Examples of the organic solid electrolyte include polyethylene derivatives, polyethylene oxide derivatives, polypropylene oxide derivatives, phosphate polymers, polyester sulfides, polyvinyl alcohol, PVDF, and polymers comprising ion dissociation groups. Examples of the inorganic solid electrolyte are nitride solid electrolytes, oxynitride solid electrolytes and sulfide solid electrolytes. Examples of the inorganic solid electrolyte are Li₃N, LiI, Li₅NI₂, Li₃N-LiI-LiOH, Li₂SiS₃, Li₄SiO₄, Li₄SiO₄-LiI-LiOH and Li₃PO₄-Li₂S-SiS₂.

### Particular examples

The examples below describe some embodiments of the present invention; they provide an illustration of the present invention, but the present invention is not limited to this.

### Example 1

A lithium battery was made by the following method:
(1) Preparation of positive electrode plate: monocrystalline and polycrystalline lithium nickel cobalt manganese oxide, superconductive carbon black and PVDF were added to NMP, and mixed evenly to prepare a slurry; the positive electrode slurry was evenly applied to a surface of a positive electrode current collector aluminium foil of thickness 15 µm, and dried at 100°C to remove NMP, to obtain a positive electrode plate coated with a positive electrode material on one side. The above step was then repeated on the other surface of the aluminium foil, to obtain a positive electrode plate coated with a positive electrode material on both sides. Roller pressing and cutting were then performed to obtain a positive electrode plate of specification 59.5mm × 1450mm. The positive electrode material had a single-side application weight of 16 mg/cm² and a compaction density of 3.4 g/cm³.
(2) Preparation of negative electrode plate: graphite, a silicon-carbon material, superconductive carbon black, single-walled carbon nanotubes, CMC, SBR and deionized water were mixed evenly to prepare a negative electrode slurry. The negative electrode slurry was then applied to a surface of a negative electrode current collector copper foil of thickness 8 µm, and dried at 70°C to remove solvent, to obtain a negative electrode plate coated with a negative electrode material on one side. The above step was then repeated on the other surface of the copper foil, to obtain a negative electrode plate coated with a negative electrode material on both sides. Roller pressing and cutting were then performed to obtain a positive electrode plate of specification 62.5mm × 1500mm. The negative electrode material had a single-side application weight of 5.07 mg/cm², a compaction density of 1.40 g/cm³ and a single-side negative electrode material thickness of 37.5 µm; and the negative electrode had a diffusion resistance of 3 Ω*cm², a diffusion resistivity of 787.5 Ω*cm and a capacitance of 9.8 mF.
(3) The positive electrode plate, the negative electrode plate and a ceramic separator (PE+Al₂O₃) were assembled by rolling to form a cylindrical rolled core, welded to a busbar, fitted into a steel casing and then subjected to groove rolling, baked for 24 h at a temperature of 80°C to remove moisture, then electrolyte was injected, and activation was performed by a suitable activation process to obtain a lithium battery.

### Example 2

A lithium battery was made by the method described in Example 1, but the following parameters were used in the preparation of the negative electrode plate: the negative electrode material had a single-side application weight of 4.57 mg/cm², a compaction density of 1.50 g/cm³ and a single-side negative electrode material thickness of 31.5 µm; and the negative electrode had a diffusion resistance of 3.1 Ω*cm², a diffusion resistivity of 990.5 Ω*cm and a capacitance of 10.7 mF.

### Example 3

A lithium battery was made by the method described in Example 1, but the following parameters were used in the preparation of the negative electrode plate: the negative electrode material had a single-side application weight of 4.20 mg/cm², a compaction density of 1.60 g/cm³ and a single-side negative electrode material thickness of 28.0 µm; and the negative electrode had a diffusion resistance of 3.4 Ω*cm², a diffusion resistivity of 1198.6 Ω*cm and a capacitance of 10.2 mF.

Details of the negative electrode parameters in Examples 1 - 3 are shown in **Table 1** below.

**Table 1: Negative electrode parameters in Examples 1 - 3**

| **Example** | **Compaction density (g/cm³)** | **Single-side application weight (mg/cm²)** | **Single-side negative electrode material thickness (µm)** | **Diffusion resistance (*cm²)** | **Diffusion resistivity (Ω*cm)** | **Capacitance (mF)** |
|---|---|---|---|---|---|---|
| **1** | 1.40 | 5.07 | 37.5 | 3.0 | 787.5 | 9.8 |
| **2** | 1.50 | 4.57 | 31.5 | 3.1 | 990.5 | 10.7 |
| **3** | 1.60 | 4.20 | 28.0 | 3.4 | 1198.6 | 10.2 |

### Test example 1: test of storage for 30 days at 60°C

The lithium batteries obtained in Examples 1 - 3 underwent a storage test at 60°C.

Testing was repeated 6 times for each Example, specifically by the following method:
1. A capacity calibration test was performed on the battery prior to storage: a constant current of 0.8 A was used for constant-voltage charging to 4.2 V, the current condition for constant voltage cutoff being 100 mA. After standing for 30 minutes, a constant current of 0.8 A was used for discharging to 2.5 V. The discharge capacity at this time was the standard capacity of the battery. A Neware battery charging/discharging test device CT-4032 was used as a charging/discharging device.
2. Pre-charging: the battery to be stored was charged at constant voltage to 4.2 V using a constant current of 6 A, the current condition for constant voltage cutoff being 100 mA.
3. Measurement of battery open circuit voltage (OCV) and internal resistance information: after pre-charging, the battery was left to stand for 6 hours; once battery polarization was eliminated, the battery underwent measurement, and the battery open circuit voltage and internal resistance information was recorded.
4. Storage at 60°C: the battery was placed in a temperature box at a temperature of 60°C; to keep the temperature uniform, the cells could not come into contact with the inner walls of the box body or the supporting frame. The temperature box was a battery ageing explosion-proof box GK-GW600-200 from Guangbo Testing Equipment Co., Ltd. in Dongguan City, the temperature uniformity being 60°C ± 1.
5. Changes in battery voltage were measured periodically for 30 days.
6. After 30 days, the battery open circuit voltage and internal resistance information was recorded, and the stored battery underwent a capacity test: a constant current of 0.8 A was used for constant-voltage charging to 4.2 V, the current condition for constant voltage cutoff being 100 mA. After standing for 30 minutes, a constant current of 0.8 A was used for discharging to 2.5 V. The discharge capacity at this time was the retained capacity of the battery after storage. Self-discharge current = (standard capacity - retained capacity)/time (hours).
7. The abovementioned battery whose retained capacity had been measured was again subjected to constant-voltage charging to 4.2 V using a constant current of 0.8 A, the current condition for constant voltage cutoff being 100 mA. After standing for 30 minutes, a constant current of 0.8 A was used for discharging to 2.5 V. The discharge capacity at this time was the recovered capacity of the battery after storage.

The test results are shown in **Table 2-4** below.

**Table 2: Pre-test data for Examples 1 - 3**

| **Example** | **Repetition** | **Standard capacity (Ah)** | **OCV (V)** | **ACIR* (mΩ)** | **DCIR** (mΩ)** |
|---|---|---|---|---|---|
| **1** | **1** | 3.974 | 4.185 | 3.0 | 10.0 |
| | **2** | 4.006 | 4.186 | 3.4 | 9.8 |
| | **3** | 4.014 | 4.186 | 3.4 | 10.0 |
| | **4** | 3.974 | 4.185 | 3.5 | 10.0 |
| | **5** | 4.040 | 4.184 | 3.4 | 9.7 |
| | **6** | 3.998 | 4.185 | 3.4 | 9.8 |
| **2** | **1** | 3.947 | 4.183 | 3.2 | 9.7 |
| | **2** | 3.970 | 4.185 | 3.3 | 9.8 |
| | **3** | 3.968 | 4.183 | 3.3 | 9.6 |
| | **4** | 3.967 | 4.183 | 3.3 | 9.5 |
| | **5** | 3.949 | 4.183 | 3.3 | 9.6 |
| | **6** | 3.948 | 4.184 | 3.3 | 9.8 |
| **3** | **1** | 3.931 | 4.185 | 3.1 | 10.0 |
| | **2** | 3.934 | 4.185 | 3.1 | 10.0 |
| | **3** | 3.920 | 4.185 | 3.2 | 10.2 |
| | **4** | 3.933 | 4.184 | 3.1 | 10.1 |
| | **5** | 3.936 | 4.184 | 3.2 | 10.2 |
| | **6** | 3.961 | 4.184 | 3.3 | 10.2 |

| | | | | | |
|---|---|---|---|---|---|
| * ACIR (Alternating Current Internal Resistance), likewise below. ** DCIR (Direct Current Internal Resistance), likewise below. | | | | | |

**Table 3: Post-test data for Examples 1 - 3**

| **Example** | **Repetition** | **Retained capacity (Ah)** | **Recovered capacity (Ah)** | **OCV (V)** | **ACIR (mΩ)** | **DCIR (mΩ)** |
|---|---|---|---|---|---|---|
| **1** | **1** | 3.395 | 3.709 | 4.090 | 4.0 | 12.9 |
| | **2** | 3.417 | 3.740 | 4.090 | 3.8 | 12.8 |
| | **3** | 3.440 | 3.761 | 4.090 | 3.9 | 12.8 |
| | **4** | 3.378 | 3.699 | 4.089 | 4.0 | 13.0 |
| | **5** | 3.463 | 3.790 | 4.090 | 3.9 | 12.7 |
| | **6** | 3.412 | 3.735 | 4.089 | 4.1 | 12.9 |
| **2** | **1** | 3.294 | 3.620 | 4.088 | 4.0 | 13.0 |
| | **2** | 3.305 | 3.643 | 4.087 | 3.8 | 13.0 |
| | **3** | 3.316 | 3.644 | 4.088 | 3.9 | 13.0 |
| | **4** | 3.306 | 3.641 | 4.087 | 4.0 | 12.9 |
| | **5** | 3.312 | 3.648 | 4.087 | 4.0 | 12.8 |
| | **6** | 3.288 | 3.624 | 4.087 | 4.0 | 13.0 |
| **3** | **1** | 3.115 | 3.580 | 4.069 | 3.9 | 13.3 |
| | **2** | 3.268 | 3.590 | 4.087 | 3.8 | 13.1 |
| | **3** | 3.251 | 3.572 | 4.087 | 3.7 | 13.3 |
| | **4** | 3.254 | 3.578 | 4.087 | 3.8 | 13.3 |
| | **5** | 3.259 | 3.588 | 4.086 | 4.6 | 13.3 |
| | **6** | 3.278 | 3.607 | 4.087 | 4.1 | 13.4 |

**Table 4: Final results for 60°C storage test of Examples 1 - 3**

| **Example** | **Repetition** | **Capacity retention rate* (%)** | **Capacity recovery rate** (%)** | **Percentage increase in ACIR (%)** | **Percentage increase in DCIR (%)** | **Change in capacity*** (Ah)** | **Self-discharge current**** (mA)** |
|---|---|---|---|---|---|---|---|
| **1** | **1** | 85.4 | 93.3 | 34.5 | 28.3 | 0.579 | 0.804 |
| | **2** | 85.3 | 93.4 | 13.2 | 30.0 | 0.589 | 0.818 |
| | **3** | 85.7 | 93.7 | 16.1 | 28.2 | 0.574 | 0.798 |
| | **4** | 85.0 | 93.1 | 14.0 | 29.7 | 0.596 | 0.828 |
| | **5** | 85.7 | 93.8 | 13.0 | 31.0 | 0.577 | 0.802 |
| | **6** | 85.3 | 93.4 | 19.6 | 30.7 | 0.586 | 0.814 |
| **2** | **1** | 83.5 | 91.7 | 24.2 | 33.9 | 0.653 | 0.907 |
| | **2** | 83.2 | 91.8 | 15.6 | 33.0 | 0.665 | 0.924 |
| | **3** | 83.6 | 91.9 | 18.2 | 35.6 | 0.652 | 0.905 |
| | **4** | 83.3 | 91.8 | 19.7 | 35.3 | 0.662 | 0.919 |
| | **5** | 83.9 | 92.4 | 21.4 | 33.8 | 0.637 | 0.885 |
| | **6** | 83.3 | 91.8 | 19.0 | 33.4 | 0.660 | 0.916 |
| **3** | **1** | 82.9 | 91.1 | 26.4 | 33.3 | 0.817 | 0.937 |
| | **2** | 83.1 | 91.3 | 19.8 | 31.3 | 0.666 | 0.925 |
| | **3** | 82.9 | 91.1 | 17.4 | 29.9 | 0.669 | 0.929 |
| | **4** | 82.7 | 91.0 | 20.6 | 31.5 | 0.679 | 0.942 |
| | **5** | 82.8 | 91.1 | 42.4 | 30.4 | 0.678 | 0.941 |
| | **6** | 82.8 | 91.1 | 24.5 | 31.6 | 0.683 | 0.948 |

| | | | | | | | |
|---|---|---|---|---|---|---|---|
| *Capacity retention rate = retained capacity/standard capacity* 100%. **Capacity recovery rate = recovered capacity/standard capacity*100%. ***Change in capacity (ΔC) = standard capacity - retained capacity. ****Self-discharge current = (standard capacity - retained capacity)/time (hours), wherein the time was 720 hours, i.e. 30 days. | | | | | | | |

**Fig. 1** depicts specific details of the capacity retention rates of Examples 1 - 3. It can be seen therefrom that overall, the capacity retention rates progressively decrease from Example 1 to Example 3 in sequence, i.e. the capacity retention rate of Example 1 is superior to that of Example 2, and the capacity retention rate of Example 2 is superior to that of Example 3.

**Fig. 2** depicts details of the self-discharge currents of Examples 1 - 3. It can be seen therefrom that overall, the self-discharge currents progressively increase from Example 1 to Example 3 in sequence, i.e. the self-discharge current of Example 1 is less than that of Example 2, and the self-discharge current of Example 2 is less than that of Example 3.

**Fig. 3** shows how the negative electrode material compaction density, the negative electrode capacitance and the self-discharge current of Examples 1 - 3 are related to each other, wherein the self-discharge current is taken from the mean value of the 6 sets of repetitions. It can be seen therefrom that the negative electrode material compaction density is positively correlated to the negative electrode capacitance and to the self-discharge current, i.e. as the negative electrode material compaction density increases, the negative electrode capacitance and the self-discharge current also increase therewith, and the respective ratios in which the negative electrode capacitance and the self-discharge current increase are similar.

The above description of various embodiments of the present invention is provided to a person of ordinary skill in the relevant art for descriptive purposes. The present invention is not intended to be exclusive or limited to a single disclosed embodiment. Based on the above, a person of ordinary skill in the art as taught above will understand various substitutes for and variants of the present invention. Therefore, although some alternative embodiments have been specifically described, a person skilled in the art will understand, or develop with relative ease, other embodiments. The present invention is intended to include all substitutes for, alterations to, and variants of the present invention described herein, as well as other embodiments falling within the spirit and scope of the present invention described above.

## Claims

1. Negative electrode for a lithium-ion battery, the negative electrode comprising a negative electrode current collector and a negative electrode material applied to the negative electrode current collector, **characterized in that** a compaction density of the negative electrode material is 1.3 - 1.7 g/cm³, a single-side application weight of the negative electrode material on the negative electrode current collector is 3.5 - 6.5 mg/cm², and a single-side negative electrode material thickness of the negative electrode is 20 - 50 µm.

2. Negative electrode according to Claim 1, wherein the compaction density of the negative electrode material is 1.3 - 1.6 g/cm³, the single-side application weight of the negative electrode material on the negative electrode current collector is 4 - 6.5 mg/cm², and the single-side negative electrode material thickness of the negative electrode is 25 - 45µm.

3. Negative electrode according to either one of the previous claims, wherein the compaction density of the negative electrode material is 1.4 - 1.5 g/cm³, the single-side application weight of the negative electrode material on the negative electrode current collector is 4.5 - 5.1 mg/cm², and the single-side negative electrode material thickness of the negative electrode is 32 - 38 µm.

4. Negative electrode according to any one of the previous claims, wherein a diffusion resistance of the negative electrode is 2.5 - 4 Ω*cm², preferably 2.8 - 3.8 Ω*cm², and more preferably 3.0 - 3.1 Ω*cm².

5. Negative electrode according to any one of the previous claims, wherein a diffusion resistivity of the negative electrode is 500 - 1500 Ω*cm, preferably 700 - 1300 Ω*cm, and more preferably 750 - 1000 Ω*cm.

6. Negative electrode according to any one of the previous claims, wherein a capacitance of the negative electrode is 7 - 12 mF, preferably 8.5 - 11 mF, and more preferably 9.5 - 10.5 mF.

7. Negative electrode according to any one of the previous claims, wherein the negative electrode comprises a negative electrode active material, a conductive agent and a binder.

8. Negative electrode according to Claim 7, wherein the conductive agent comprises superconductive carbon black and single-walled carbon nanotubes.

9. Negative electrode according to Claim 8, wherein the mass ratio of the superconductive carbon black to the single-walled carbon nanotubes is 3 - 30.

10. Negative electrode according to Claim 7, wherein the binder comprises carboxymethylcellulose and styrene-butadiene rubber.

11. Negative electrode according to Claim 7, wherein the active material comprises artificial graphite and a silicon-carbon material, the mass ratio of the artificial graphite to the silicon-carbon material being 1.5 - 10.

12. Lithium-ion battery, comprising a positive electrode, a negative electrode, an electrolyte and a casing, the negative electrode being the negative electrode for a lithium-ion battery according to any one of Claims 1 - 11.

13. Lithium-ion battery according to Claim 12, wherein a capacity retention rate in a test of storage for 30 days at 60°C is 83.2% - 86%.

14. Lithium-ion battery according to Claim 13, wherein a capacity retention rate in a test of storage for 30 days at 60°C is 84% - 85%.

15. Use of the negative electrode for a lithium-ion battery according to any one of Claims 1 - **11** for reducing a self-discharge current of a lithium-ion battery.
